# EUROPEAN PATENT APPLICATION

(11) **EP 2 098 851 A1**
(43) Date of publication of application: **09.09.2009**
(21) Application number: 08152488.6
(22) Date of filing: 07.03.2008
(51) Int. Cl.: G01N 1/40

(54) **A thermal desorption gas analyzer and a method for analyzing a gaseous environment**

(71) Applicant: Nederlandse Organisatie voor Toegepast- Natuurwetenschappelijk Onderzoek TNO, 2628 VK Delft (NL)
(72) Inventor: Duisterwinkel, Antonie Ellert, 2612 EC Delft (NL)
(74) Representative: Hatzmann, Martin

(57) **Abstract**

The invention relates to a thermal gas desorption analyzer 1 which may be integrated into a wall W of a compartment 2 confining environment E to be investigated. The analyzer 1 comprises an inner volume I adjacently arranged with the environment E. The analyzer comprising a heater 5 conceived to heat a surface which had adsorbed gas molecules from the environment E. An adsorbing surface 3a may be arranged on a cylinder, which may be rotatable about a shaft 4. In a first position 3a the surface is adsorbing gas molecules and in the second position 3b the surface, being heated by the heater 5, desorbs gas molecules, which may be carried towards a detector by a flow of a suitable carrier gas G.

## Description

### FIELD OF THE INVENTION

The invention relates to a thermal gas analyzer. The invention further relates to a monitoring system. The invention further relates to an apparatus comprising a thermal gas analyzer. The invention further relates to a method for thermal desorption gas analysis.

### BACKGROUND OF THE INVENTION

An embodiment of a thermal gas analyzer is known from US 5, 528, 032. The known thermal desorption gas spectrometer comprises a vacuum chamber arranged with a sample stage in which suitable samples can be placed. The sample is positioned in an environment to be analyzed for adsorbing gas molecules from the environment. After this, the sample is taken from this environment and is positioned in a thermal gas desorption analyzer being exposed to an ambient environment during a transition from the adsorption site to an analyzing site. The sample is heated in the thermal gas desorption analyzer by a suitable sampling stage, which in turn, is heated by a source of infrared radiation. As a result, adsorbed gas molecules are released and are analyzed using a mass spectrometer. The mass spectrometer detects the gas that desorbs from the sample as the result of heating and outputs the resulting electrical signal representative of amount of desorbed gas. In the known thermal gas analyzer it is also possible to obtain intensity of the electrical signal as a function of temperature of the sample stage up to the point where hardly any more gas desorbs from the sample. When such signal intensity is integrated the number of desorbed gas molecules can be obtained using proportionality to a standard reference sample.

It is a disadvantage of the known thermal gas desorption analyzer that the sample adsorbing gas molecules from the environment conceived to be analyzed has to be taken, notably manually, from this environment and to be positioned on a sample stage of the thermal gas analyzer. In addition, in the known analyzer a surface of the sample which adsorbs gas molecules is heated indirectly at a desorption site, which may influence accurateness of data processing, in particular when the signal is interpreted as a function of a temperature of the sample stage. In addition, use of a reference sample is disadvantageous.

### SUMMARY OF THE INVENTION

It is an object of the invention to provide a thermal gas desorption analyzer which can operate at conditions from (ultra)high vacuum to atmospheric conditions independently of the composition of the gas conceived to be analyzed.

To this end the thermal desorption gas analyzer according to the invention comprises:
- an inner volume having a heater cooperating with a material surface for causing desorption of gas molecules from the material surface;
wherein
the surface is arranged on a displaceable platform for alternating the surface between a first position in contact with an environment conceived to be investigated for enabling adsorption of said gas molecules and a second position in the inner volume in cooperation with said heater for enabling said desorption, said inner volume adjoining said environment.

The invention is based on the insight that the thermal gas desorption analyzer having improved operational conditions can be provided when the inner volume of the gas analyzer is adjacent to the sampled environment. In this case a sampling surface can be directly transferred from the sampled environment into the inner volume of the analyzer without being subjected to any third environments which may influence the outcome.

In an embodiment of the thermal gas desorption analyzer according to the invention the platform comprises a retractable plate conceived to be displaced between the first position and the second position.

It is found to be advantageous to provide the sampling surface for adsorbing gas molecules, like molecules of high molecular mass species as a plate having substantial dimensions. For example the adsorption surface of such plate may be in the order of 100 cm². Preferably, the plate has a substantially pure surface, which is not porous so that desorption of the precipitants can be easily implemented by means of heating the plate. In situation, where the environment is confined to a chamber having at least one wall, the analyzer may be conceived to be integrated in the wall. For example, in industrial applications, where it is necessary to determine gas composition and/or to monitor a presence of any hazardous species, the analyzer according to the invention is advantageously integrated in the wall of the chamber confining the environment conceived to be analyzed so that the environment and the inner volume of the analyzer are adjacent to each other. This embodiment finds a particular application in high vacuum apparatuses, because presence of high molecular mass species in the atmosphere of the apparatus may deteriorate the quality of the patterning process. Examples of such disadvantageous high molecular mass species are high molecular mass hydrocarbonates or fluorinated compounds. Alternatively, the analyzer according to the invention can be integrated in a wall of a chemical reactor, a medical suite or in a wall of any other suitable compartment.

It will be appreciated that the analyzer according to the invention is suitable for cooperating with (ultra)high-vacuum environments as well as with environments having atmospheric pressure. In order to facilitate a transfer of the sampling surface between the environment and the inner volume of the analyzer, which may be kept at atmospheric pressure a valve may be provided in the wall for separating the environment from the inner volume of the analyzer.

In a further embodiment of the thermal desorption gas analyzer according to the invention the platform comprises a rotatable body conceived to be rotated between the first position and the second position.

It is found to be particularly advantageous to provide the platform as a rotatable body, for example a sphere or a cylinder so that the surface can be transported from the first position to the second position by a simple rotation of the rotatable body about its axis. In this way, when the analyzer comprising the rotatable body is integrated in a wall of a chamber confining the environment, the surface of the rotatable body can also function as a separation barrier between the environment and the inner volume of the analyzer. In this case no supplementary valves may be necessary.

Preferably, in situations, when the environment has reduced pressure, the analyzer further comprises a stationary wall arranged in a close vicinity to the rotatable body and a gas source for providing a gas flow between the rotatable body and the stationary wall.

It will be appreciated that the stationary wall substantially conforms to the rotatable body being distanced from it by a small space. By providing a source of a gas, preferably inert gas, between the stationary wall and the rotatable body, the gas functions as a further separating medium between the environment and the inner volume thereby preventing that gas from the environment penetrates the inner volume of the analyzer and contaminates it. Due to the fact that the flowing gas may be inert, it does not effect molecular composition of the gas of the environment causing thereby no interference with the measurements.

In a further embodiment of the thermal desorption gas analyzer according to the invention, the surface comprises a plurality of segments, said segments being thermally isolated from each other.

It is found to be advantageous to provide the surface with mutually thermally isolated segments to enable a due separation between a cold region conceived to adsorb gas and a heated region which is being processed. Therefore, it is possible to define a first sub-surface of the rotating body and a second sub-surface of the rotating body which are substantially diametrically displaced and to use these two sub-surfaces at the same time thereby improving efficiency of the analyzer according to the invention. For example, the temperature isolation may be implemented by providing slices or portions of isolating material between respective segments of the rotatable body.

Advantageously, the surface conceived to adsorb gas molecules may comprise a material similar to a material of a wall confining the environment, while the segments of the rotatable body are interleaved with thermally isolating material.

In a further advantageous embodiment of the thermal gas desorption analyzer according to the invention the rotatable body may be cooled using a fluid. Preferably, a flow of a suitable cooled gas, like nitrogen, helium or argon is used for this purpose.

In order to enable desorption of the gas molecules from the surface the surface is preferably directly heated using a suitable heater. The heater may comprise infrared heaters, heated gas streams or direct surface heating by electric currents through the surface and may advantageously be arranged to heat the surface for linearly increasing the temperature thereof. This has an advantage pertaining to the fact that different gas species have different desorption temperature. By measuring the temperature of the surface and by plotting detector readings against this temperature a contamination type may be determined, because the temperature at which the contamination desorbs is a strong indicator of the desorption energy and thus a molar weight of the main constituent of the contaminants.

In order to implement detection of the desorbed gas molecules, the thermal gas desorption analyzer according to the invention may comprise a flow of a carrier fluid in the inner volume for transporting desorbed gas molecules to a detector. Preferably, suitable gas, like nitrogen, helium or argon is used for this purpose. The detector may be arranged to provide an electric signal as a function of detected contaminants and/or as a function of their respective levels.

In order to compare the signals from the detector with the temperature of the surface, data about the heater temperature or from a temperature sensor related to the surface may be provided to the detector. Preferably, the detector is connected to a processing unit, like a computer, which is arranged to process data from the detector as such or in combination with temperature data. Additionally, the processing unit may be arranged to determine the type of the contamination and to calculate respective amounts of the contaminants and to generate an alarm signal to alarming means in case when contamination type and/or level does not meet allowable constraints. Alternatively, the signal may be used for suitable process control, for example to stop or to regulate some parts of the process.

The monitoring system according to the invention comprises the thermal gas desorption analyzer as is set forth in the foregoing.

An apparatus according to the invention comprises a thermal gas analyzer as is described with reference to the foregoing. An example of a suitable apparatus is a high vacuum apparatus. It will be appreciated that a plurality of suitable apparata fall under the scope of the high vacuum apparatus.

A method for thermal gas desorption analysis comprises the steps of:
- adsorbing gas molecules from an environment under investigation by a surface,
- desorption the gas molecules in an inner volume of a thermal desorption gas analyzer from the surface;
- using a displaceable platform for alternating the surface between a first position in contact with said environment for enabling said adsorption and a second position inside said inner volume for enabling said desorption, wherein said inner volume adjoins said environment.

These and other aspects of the invention will be discussed in more detail with reference to drawings. It will be appreciated that the drawings are merely used for illustrative purposes and may not be used for limiting the scope of the appended claims.

### BRIEF DESCRIPTION OF THE DRAWINGS

Figure 1 presents a schematic view of an embodiment of a thermal gas desorption analyzer according to a first aspect of the invention.
Figure 2 presents a schematic view of an embodiment of an adsorbing surface used in the analyzer of Figure 1;
Figure 3 presents a schematic view of an embodiment of a monitoring system according to the invention;
Figure 4 presents a schematic view of an apparatus according to the invention.

### DETAILED DESCRIPTION OF THE DRAWINGS

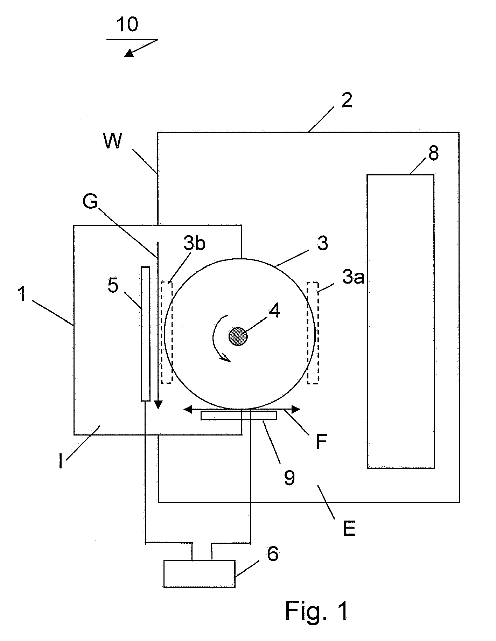

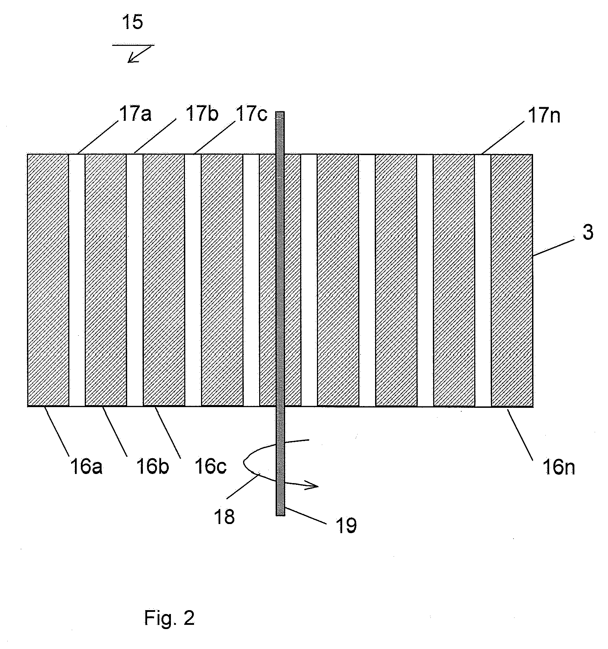

Figure 1 presents a schematic view of an embodiment of a thermal gas desorption analyzer according to a first aspect of the invention. The thermal gas desorption analyzer 1 according to the invention is depicted being integrated into a wall W of a compartment 2 confining environment E to be investigated. The compartment may relate, but is not limited to a room, a chamber, like a chemical reactor or a physical lab, a vacuum chamber, a high vacuum apparatus, a medical site, or the like. The analyzer 1 comprises an inner volume I adjacently arranged with the environment E. The analyzer comprising a heater 5 conceived to heat a surface which had adsorbed gas molecules from the environment E. Alternatively, the heater may be integrated in the wall. In this particular embodiment the adsorbing surface 3a is arranged on a cylinder, which is rotatable about a shaft 4. In a first position 3a the surface is adsorbing gas molecules and in the second position 3b the surface, being heated by the heater 5, desorbs gas molecules, which may advantageously be carried towards a detector (not shown) by a flow of a suitable carrier gas G. The detector provides suitable electrical signal dependent on the amount and/or type of the gas molecules which are desorbed in the inner volume I of the analyzer 1. Additionally, the analyzer 1 may comprise a control unit 6 arranged to rotate the cylinder 3 and to switch on/off the heater. This is advantageous in case when only one surface option of the cylinder 3 is used at a time. Alternatively, two substantially diametrically displaced surface portions 3a and 3b may be used simultaneously so that when the surface portion 3a adsorbs gas molecules, the surface portion 3b is heated for desorbing gas molecules adsorbed by the heated surface portion. In order to enable such simultaneous use of diametrically displaced surface portions, they must be thermally isolated from each other. An embodiment of such thermal isolation is discussed with reference to Figure 2.
In order to prevent contamination of the inner volume I of the analyzer 1 with gas molecules from the environment E, the cylinder 3 may be positioned within a cover (not shown) which substantially conforms to the shape of the cylinder leaving a small space between the outer surface of the cylinder 3 and the cover. In this space a flow of inert gas F may be advantageously generated by a suitable gas source 9 in order to provide a material barrier between the inner volume I and the environment next to the material barrier provided by the cylinder 3 itself. Due to the fact that the flowing gas is inert it does not influence measurement results.

Figure 2 presents a schematic view of an embodiment of an adsorbing surface used in the analyzer of Figure 1. Hereby a surface of the cylinder 3 shown in Figure 1 is depicted in a plane view thereby for simplicity reasons disconnecting portions 16a and 16n from each other. The cylinder 3, in operation is conceived to rotate about the shaft 19. In this embodiment in order to enable thermal isolation of a heated desorbing surface of the cylinder 3 from a cold adsorption surface, the surface of the cylinder is segmented into a plurality of heat conducting segments 16a, 16b, 16c, ... , 16n, interleaved with segments of thermally isolating material 17a, 17b, 17c, ..., 17n. In this way thermal conduction of heat from a heated surface is prevented to a cold surface.

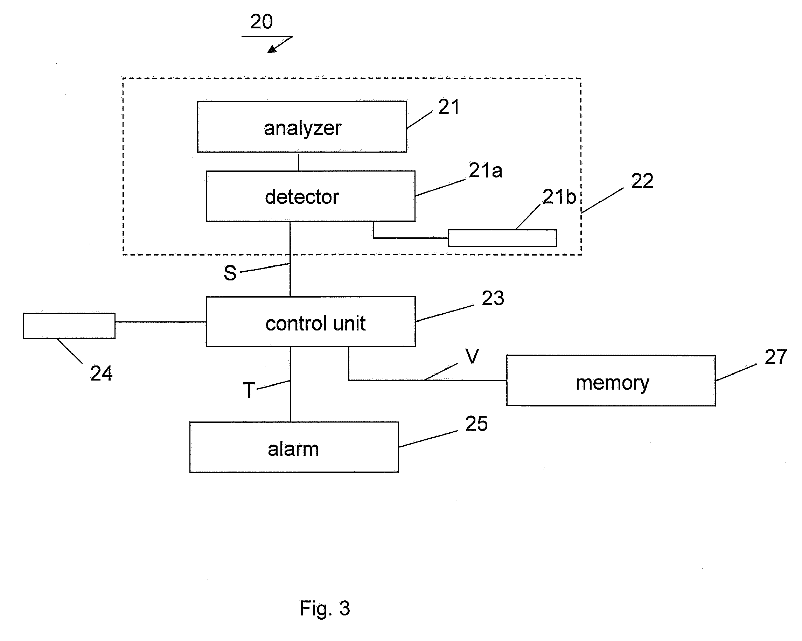

Figure 3 presents a schematic view of an embodiment of a monitoring system according to the invention. The monitoring system 20 according to the invention comprises a sensor 21 which may be arranged according to the principles set forth with reference to Figure 1. The sensor 21 is preferably arranged to provide an electric signal S representative of amount of species having high molecular mass in a gas sample, which has been analyzed by the sensor 21. It should be appreciated that the term gas sample may refer to a sample extracted from an atmosphere under investigation, or, alternatively, may refer to surrounding of the sensor. The latter is particularly the case when the sensor 21 is arranged for environmental studies, or when it is positioned inside a closed atmosphere, for example inside a high vacuum apparatus.

The monitoring system according to the invention may further comprise a control unit 23 arranged to analyze the signal S. The control unit 23 may be arranged to record readings of a signal value V in a suitable way, for example a file may be created in a memory 27 of a computer. Alternatively or additionally, the control unit 23 may be arranged to compare a current value of the signal S with a pre-defined threshold value and to produce a trigger signal T to alarm means 25 for warning purposes. In particular, when such monitoring system is arranged in a high vacuum apparatus, the trigger signal may also be used to control operational conditions of the high vacuum apparatus, like to accordingly control pumping means or to control source of radiation.

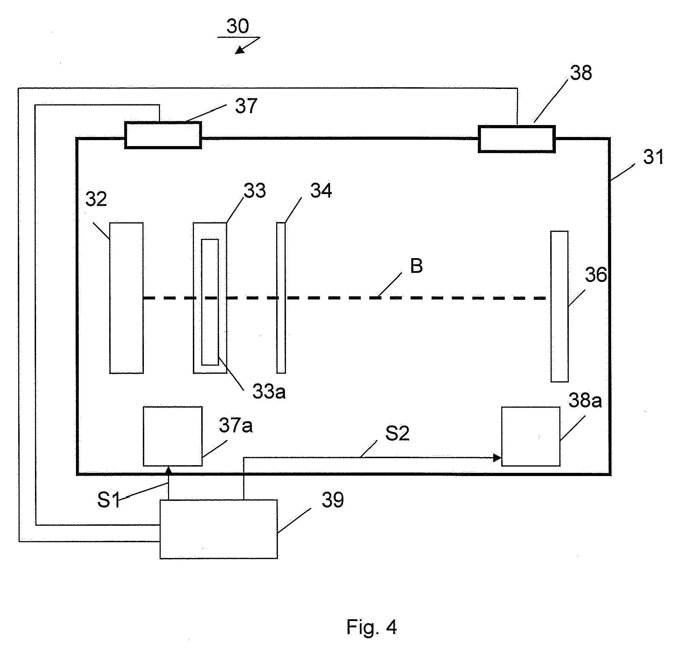

Figure 4 presents a schematic view of an apparatus according to the invention. The apparatus 30 may relate to a suitable high vacuum apparatus, as is known in the art, comprising thermal gas analyzers 37, 38 as are described in detail with reference to the foregoing figures.

The apparatus 30 may comprise a source 32, for example an ultra-violet laser, or high intensity laser, which is arranged for generating a beam B of suitable radiation to be subsequently used to impinge on a target 36. The generated beam of radiation may be subsequently suitably conditioned in a illumination system and/or projection system 33, which may comprise a suitable plurality of optical elements 33a. The conditioned radiation beam then impinges on a target 36 to cause suitable modification thereof.

The atmosphere of the apparatus 30 may be hydrogen-based. It is appreciated in the art that high mass species like heavy hydrocarbon compounds or heavy fluoride compounds, being contaminants in the hydrogen atmosphere, may substantially deteriorate operational characteristics of the apparatus. In the apparatus according to the invention thermal gas analyzers 37 or 38 may be positioned at regions where specific control of the atmosphere purity should be enabled. First, such region may correspond to a region nearby the source of radiation 32. Alternatively, or additionally such region may relate to a region in a vicinity of the illumination and/or projection system 33, as contaminant compositions precipitating on the lenses of the optical elements 33a of the illumination and/or projection system 33 may substantially deteriorate quality of the beam B. It will be appreciated that a suitable plurality of analyzers may be arranged at a plurality of desirable control regions within the apparatus 30. The analyzers 37, 38 may be integrated in a wall 31 of the apparatus, or may be positioned within its volume.

The apparatus 30 may further comprise a monitoring system as discussed with reference to Figure 3. In this way, the analyzers 37, 38 may be connected to the control unit 39 which may be adapted either to provide a trigger signal (not shown) upon an event concentration of the high molecular mass species in the atmosphere of the apparatus exceeds allowable limit, and/or to provide a control signal S1, S2 to suitable functional units 37a, 38a arranged to control environment at specific regions of the apparatus. Still alternatively, the control signals S1, S2 may be used to control parameters of the source 32 and/or to control other functional parameters of the apparatus 30 enabling suitable process control. Further embodiments of functional units relate to pumps, electric controls, or the like.

While specific embodiments have been described above, it will be appreciated that the invention may be practiced otherwise than as described. The descriptions above are intended to be illustrative, not limiting. Thus, it will be apparent to one skilled in the art that modifications may be made to the invention as described in the foregoing without departing from the scope of the claims set out below.

## Claims

1. A thermal gas desorption analyzer comprising:
- an inner volume having a heater cooperating with a material surface for causing desorption of gas molecules from the material surface;
**characterized in that**
the surface is arranged on a displaceable platform for alternating the surface between a first position in contact with an environment conceived to be investigated for enabling adsorption of said gas molecules and a second position in the inner volume in cooperation with said heater for enabling said desorption, said inner volume adjoining said environment.

2. An analyzer according to claim 1, wherein the platform comprises a retractable plate conceived to be displaced between the first position and the second position.

3. An analyzer according to claim 2 wherein the environment is confined to a chamber having at least one wall, the analyzer being conceived to be integrated in the wall.

4. An analyzer according to claim 3, wherein the wall is provided with a valve for separating the environment from the inner volume of the analyzer.

5. An analyzer according to claim 1, wherein the platform comprises a rotatable body conceived to be rotated between the first position and the second position.

6. An analyzer according to claim 5, wherein the environment is separated from the inner volume of the analyzer at least partially by means of the rotatable body.

7. An analyzer according to claim 6, wherein the environment is evacuated, the analyzer further comprising a stationary wall arranged in a close vicinity to the rotatable body and a gas source for providing a gas flow between the rotatable body and the stationary wall.

8. An analyzer according to any one of the preceding claims, wherein the surface comprises a plurality of segments, said segments being thermally isolated from each other.

9. An analyzer according to any one of the preceding claims 8, wherein the environment is confined by a chamber having at least a wall, the surface comprises a material similar to a material of the wall, the rotatable body comprises a thermally isolating material.

10. An analyzer according to any one of the preceding claims 5 to 9, wherein the rotatable body is cooled using a fluid.

11. An analyzer according to any preceding claim, wherein the second position is cooperating with a flow of a carrier fluid for transporting desorbed gas molecules to a detector.

12. An analyzer according to claim 11, wherein the heater is arranged to linearly increase temperature of the surface.

13. An analyzer according to claim 12, wherein data on the heater temperature is provided to the detector.

14. A monitoring system comprising an analyzer according to any one of the preceding claims and an alarm unit.

15. A high vacuum apparatus comprising an analyzer according to any preceding claim 1- 13.

16. A method for thermal gas desorption analysis, comprising the steps of:
- adsorbing gas molecules from an environment under investigation by a surface,
- desorption the gas molecules in an inner volume of a thermal desorption gas analyzer from the surface;
- using a displaceable platform for alternating the surface between a first position in contact with said environment for enabling said adsorption and a second position inside said inner volume for enabling said desorption, wherein said inner volume adjoins said environment.
